## Europäisches Patentamt
## European Patent Office
## Office européen des brevets

(19) 

(11) Numéro de publication : **0 015 401**
**B1**

(12) 

# FASCICULE DE BREVET EUROPÉEN

(45) Date de publication du fascicule du brevet :
**03.08.83**

(51) Int. Cl.³ : **H 01 M   4/36, H 01 M   4/02**

(21) Numéro de dépôt : **80100631.3**

(22) Date de dépôt : **07.02.80**

(54) Générateur électrochimique à electrolyte non aqueux.

(30) Priorité : **14.02.79 FR 7903773**
**16.01.80 FR 8000898**

(43) Date de publication de la demande :
**17.09.80 Bulletin 80/19**

(45) Mention de la délivrance du brevet :
**03.08.83 Bulletin 83/31**

(84) Etats contractants désignés :
**AT BE CH DE FR GB IT LU NL SE**

(56) Documents cités :
**DE A 2 521 769**
**FR A 1 350 008**
**US A 3 117 032**
**US A 3 160 531**
**US A 3 189 485**

(73) Titulaire : **GIPELEC S.A.**
**125, rue du Président Wilson**
**F-92302 Levallois-Perret (FR)**

(72) Inventeur : **Broussely, Michel**
**36 rue de la Bugellerie**
**F-86000 Poitiers (FR)**
Inventeur : **Baudry, Sylvie**
**2 rue Malherbe**
**F-86000 Poitiers (FR)**

(74) Mandataire : **Weinmiller, Jürgen et al**
**Zeppelinstrasse 63**
**D-8000 München 80 (DE)**

EP 0 015 401 B1

Jouve, 18, rue St-Denis, 75001 Paris, France

### Générateur électrochimique à électrolyte non aqueux

La présente invention concerne un générateur électrochimique comportant une électrode négative à base d'un métal alcalin ou alcalino-terreux, un électrolyte non aqueux, et une électrode positive constituée par un composé vitreux.

On connaît un tel générateur, par exemple à partir du document US-A 3 160 531. Ce générateur est conçu pour opérer en température élevée, de l'ordre de 150 °C et plus. Il en est de même pour le générateur connu par le document US-A 3 189 485, dont la cathode est un verre contenant de l'oxyde d'uranium et dont l'électrolyte est solide à la température ambiante.

L'invention vise à proposer un générateur tel que spécifié ci-dessus pouvant travailler à la température ambiante. Ce générateur est caractérisé par le fait que ledit électrolyte est liquide à la pression et à la température ordinaires, et que ledit composé vitreux résulte de l'addition de 10 % en poids ou moins de silice à une proportion prépondérante d'au moins un oxyde choisi parmi l'oxyde de plomb, l'oxyde de cuivre, et leurs mélanges et leurs combinaisons avec l'oxyde de bismuth et l'oxyde de chrome.

Il est à noter que le document FR-A 1 350 008 décrit déjà des matières actives positives similaires pour générateurs électrochimiques. Seulement, il s'agit de générateurs à électrolyte aqueux, donc d'une catégorie de piles tout à fait différente.

Selon une réalisation préférée de l'invention, l'on ajoute à l'oxyde de cuivre (CuO) de l'oxyde de bismuth ($Bi_2O_3$) dans la proportion d'au moins une molécule de $Bi_2O_3$ pour une molécule de CuO environ.

En particulier, on ajoute environ une molécule de $Bi_2O_3$ pour une molécule de CuO.

Les matières actives selon l'invention ne doivent pas être confondues avec les silicates métalliques, qu'il a déjà été proposé d'utiliser comme matières positives dans des générateurs à électrolyte non aqueux. Ces silicates sont des composés cristallisés.

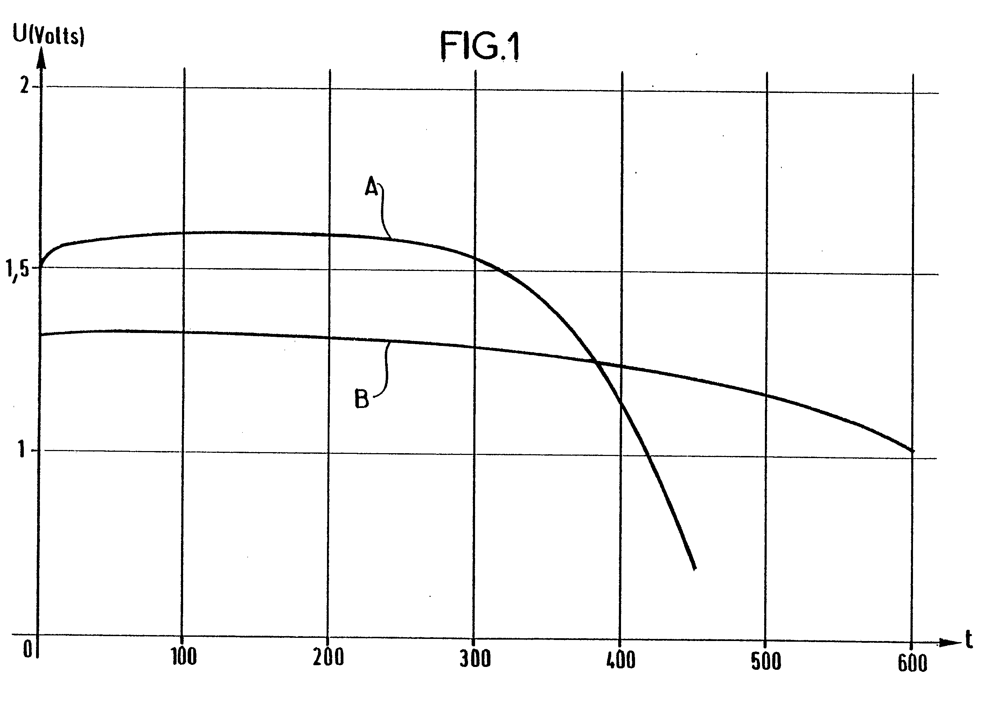

L'invention sera mieux comprise grâce aux exemples de réalisation décrits ci-après à titre illustratif et non limitatif, en regard du dessin annexé dans lequel les figures 1 à 3 représentent des courbes de décharge de piles électriques selon l'invention et à titre de comparaison des courbes de décharge de piles selon la technique antérieure.

La figure 1 est relative à des courbes de décharge d'une pile contenant comme matière active un verre composé de PbO et de $SiO_2$ (pile A) et, à titre de comparaison, d'une pile connue contenant comme matière active PbO (pile B). Il s'agit de piles boutons de module 44 (diamètre 11,4 mm, hauteur 5,35 mm).

La première d'entre elles contient comme matière active positive un verre composé en poids de 90 % de PbO et 10 % de $SiO_2$ ; 650 mg de masse positive constituée de 90 % de ce verre et de 10 % de poudre de plomb comme conducteur sont comprimés sous 1,2 tonne sur un collecteur pour former l'électrode positive. L'électrode négative contient une quantité de lithium excédentaire par rapport à la capacité positive. L'électrolyte est une solution deux fois molaire de perchlorate de lithium dans le dioxolanne.

La seconde pile contient 1,07 g d'une masse positive composée de 77 % de PbO et 23 % de plomb, comprimé sous 5 tonnes environ. Le lithium est également en quantité excédentaire, et l'électrolyte est le même que précédemment.

Ces deux piles ont été déchargées à travers une résistance de 5 000 ohms. Les courbes A et B de la figure 1 sont les courbes de décharge obtenues respectivement pour les deux piles (tension U en volts en fonction de la durée de décharge t en heures). La tension de décharge de la pile au verre est nettement plus élevée que celle de la pile à l'oxyde de plomb cristallisé. Elle délivre pour une tension d'arrêt de 1,2 V pratiquement la capacité théorique correspondant à la réduction complète du plomb (123 mAh pour 126 mAh théoriques). Pour cette même tension, la pile témoin ne fournit que 120 mAh sur 198 mAh théoriques.

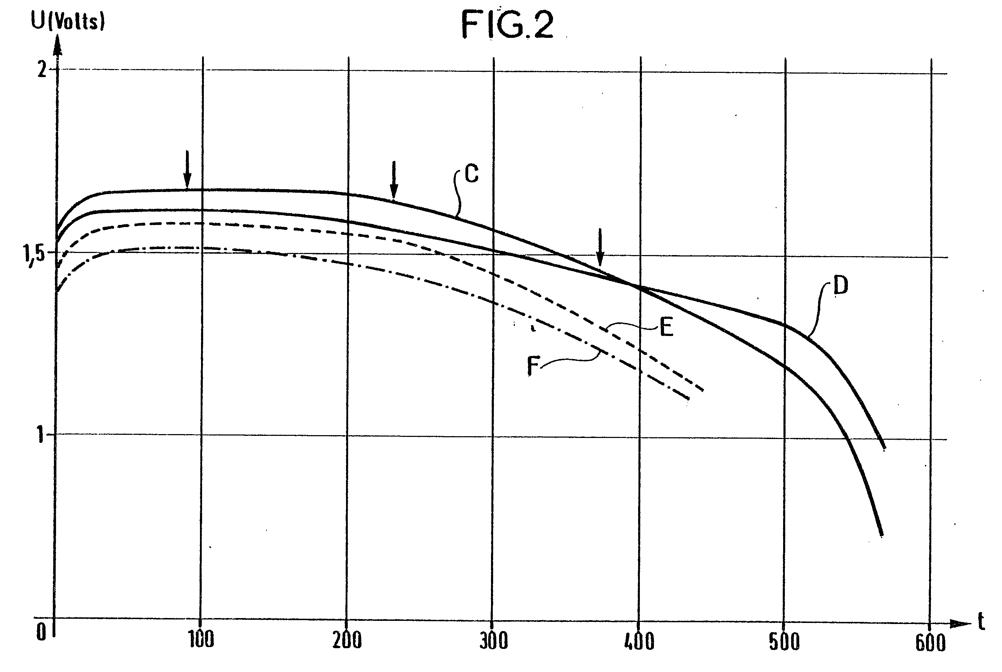

La pile à laquelle correspond la courbe C de la figure 2 (pile C) a pour matière active un verre composé de $Bi_2O_3$, PbO et $SiO_2$, la proportion de $SiO_2$ étant 5 % en poids et le rapport atomique Bi/Pb étant égal à 1, de sorte qu'on peut considérer que ce verre est un produit d'addition de $SiO_2$ et du bismuthate de plomb $Bi_2Pb_2O_5$. La pile contient 750 mg de masse positive comprenant 10 % en poids de poudre de plomb, les autres conditions étant les mêmes que pour la pile faisant l'objet de la courbe A de la figure 1 (pile A). La pile témoin dont la décharge est représentée par la courbe D de la figure 2 (pile D) diffère de la pile C en ce que sa matière active est le bismuthate de plomb cristallisé $Bi_2Pb_2O_5$.

Ces deux piles ont été déchargées sur des résistances de 5 000 ohms, avec des pointes de 1 seconde à 1 milliampère, indiquées par des flèches sur la figure. Les courbes C et D représentent la variation dans le temps de la tension des piles pendant la décharge sur résistance. Les courbes E (pour la pile C) et F (pour la pile D) représentent l'évolution de la tension mesurée à la fin des pointes.

Ici encore la tension en début de décharge est plus élevée pour la pile au verre que pour l'autre pile, aussi bien en palier que lors des pointes. La capacité obtenue pour une tension d'arrêt de 1,2 V est de 146 mAh (soit 77,5 % de la capacité théorique correspondant à la réduction totale de Bi et Pb) pour la pile C, et 160 mAh (80,7 % de la capacité théorique) pour la pile D. La tension en pointe de la pile C au verre reste plus élevée que celle de la pile D jusqu'à la tension d'arrêt.

On a également réalisé une pile ayant comme matière active un verre contenant 5 % de $Cr_2O_3$,

le complément étant constitué par $Bi_2O_3$, PbO et $SiO_2$ dans les mêmes proportions relatives que dans la pile C. Cette adjonction de $Cr_2O_3$ n'a pas eu d'effet décelable sur la courbe de décharge de la pile.

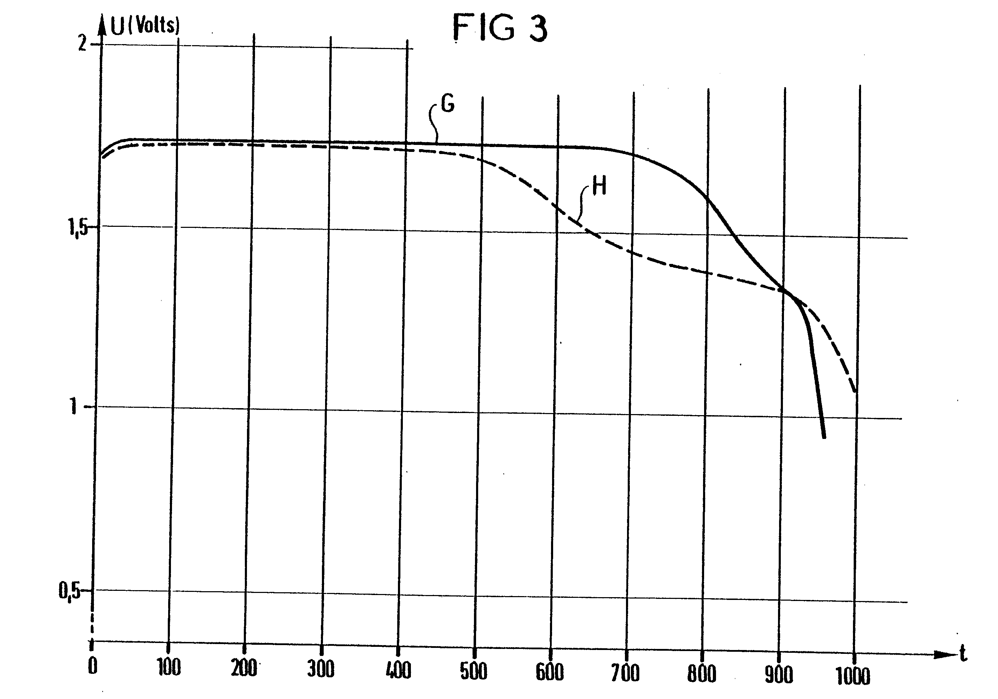

La figure 3 représente des courbes de décharge d'une pile G selon l'invention et d'une pile témoin H de l'art antérieur à matière active positive cristallisée.

Il s'agit de piles boutons de diamètre 11,4 mm et de hauteur 3,5 mm. La matière active positive selon l'invention (pile G) est un verre composé en poids de 92,5 % de bismuthate de cuivre $CuBi_2O_4$ et de 7,5 % de silice $SiO_2$. Une masse positive, constituée de 90 % en poids de ce verre et de 10 % de poudre de plomb comme conducteur électronique, est comprimée sur un collecteur pour former l'électrode positive. L'électrode négative contient une quantité de lithium excédentaire par rapport à la capacité positive. L'électrolyte est une solution molaire de perchlorate de lithium dans un mélange équivolumique carbonate de propylène-diméthoxyéthane. La pile témoin H a été réalisée en utilisant comme matière active positive $CuBi_2O_4$ cristallisé.

Ces piles ont été déchargées à travers des résistances de 15 000 ohms. Elles délivrent pour une tension d'arrêt de 1 volt des capacités de 110 et 109 mAh, respectivement, soit 91 et 87 % de la capacité théorique. L'énergie spécifique obtenue est 517 et 495 Wh/dm³.

On voit que le palier initial de décharge de la pile selon l'invention (courbe G) est légèrement plus élevé que celui de la pile témoin (courbe H) et qu'il se prolonge plus loin, ce qui est un avantage très appréciable.

D'autres oxydes, électrochimiquement réductibles ou non, peuvent être introduits dans les matières actives vitreuses selon l'invention, pour améliorer tel ou tel aspect du fonctionnement des piles. Il est également possible, bien entendu, de modifier les proportions relatives des composants principaux tels que $Bi_2O_3$ et PbO, ou $Bi_2O_3$ et CuO. Toutefois, dans le cas de $Bi_2O_3$ et CuO, si le rapport molaire $CuO/Bi_2O_3$ dépasse sensiblement 1 en l'absence d'autres additifs que $SiO_2$, on assiste à une séparation de CuO cristallisé. Par ailleurs, $Bi_2O_3$ étant électrochimiquement moins intéressant, il n'y a pas intérêt à ce que ce rapport soit trop petit.

La quantité minimale de $SiO_2$ pour obtenir une structure vitreuse dépendra de la nature et des proportions relatives des autres constituants. A titre d'exemple on peut obtenir une structure vitreuse en fondant du bismuthate de cuivre avec de la silice cette dernière se trouvant dans une proportion d'au moins 7 % en poids environ.

Les matières actives selon l'invention peuvent être préparées très simplement en fondant ensemble la silice et les autres constituants (soit sous forme d'oxydes simples tels que $Bi_2O_3$, PbO, CuO soit sous forme d'oxydes mixtes tels que $Bi_2Pb_2O_5$ ou $CuBi_2O_4$), et en refroidissant brusquement le bain fondu, par exemple par coulée sur un substrat froid ; le verre est ensuite broyé.

## Revendications

1. Générateur électrochimique comportant une électrode négative à base d'un métal alcalin ou alcalino-terreux, un électrolyte non aqueux, et une électrode positive constituée par un composé vitreux, caractérisé par le fait que ledit électrolyte est liquide à la pression et à la température ordinaires, et que ledit composé vitreux résulte de l'addition de 10 % en poids ou moins de silice à une proportion prépondérante d'au moins un oxyde choisi parmi l'oxyde de plomb, l'oxyde de cuivre, et leurs mélanges et leurs combinaisons avec l'oxyde de bismuth et l'oxyde de chrome.

2. Générateur selon la revendication 1, caractérisé par le fait que l'on ajoute à l'oxyde de cuivre (CuO) de l'oxyde de bismuth ($Bi_2O_3$) dans la proportion d'au moins une molécule de $Bi_2O_3$ pour une molécule de CuO environ.

3. Générateur selon la revendication 2, caractérisé par le fait que ladite proportion est d'environ une molécule de $Bi_2O_3$ pour une molécule de CuO.

4. Générateur électrochimique selon la revendication 1, caractérisé par le fait que ledit électrolyte est une solution d'au moins un sel dans au moins un solvant organique.

## Claims

1. An electrochemical generator comprising a negative electrode on the basis of an alkali or alkali-earth metal, a non-aqueous electrolyte, and a positive electrode constituted by a vitreous compound, characterized in that said electrolyte is liquid at ordinary pressure and temperature, and in that said vitreous compound results from the addition of 10 % by weight or less of silica to a main proportion of at least one oxide chosen from lead oxide, copper oxide and their mixtures and combinations with bismuth oxide and chromium oxide.

2. A generator according to claim 1, characterized in that bismuth oxide ($Bi_2O_3$) is added to the copper oxide (CuO) in a proportion of at least one molecule of $Bi_2O_3$ to about one molecule of CuO.

3. A generator according to claim 2, characterized in that said proportion is about one molecule of $Bi_2O_3$ to one molecule of CuO.

4. An electrochemical generator according to claim 1, characterized in that said electrolyte is a solution of at least one salt in at least one organic solvent.

## Ansprüche

1. Elektrochemischer Generator, der eine negative Elektrode auf der Basis eines Alkalimetalls oder eines Erd-Alkalimetalls, einen nicht-wässrigen Elektrolyten und eine positive Elektrode bestehend aus einem glasartigen Stoff aufweist, dadurch gekennzeichnet, daß der Elektrolyt bei normalem Druck und normaler Temperatur flüssig ist und daß der glasartige Stoff aus dem Zusatz von 10 Gewichtsprozent oder weniger Siliziumdioxid zu einem vorherrschenden Anteil von mindestens einem Oxid entsteht, das aus Bleioxid, Kupferoxid und ihren Mischungen und ihren Kombinationen mit Wismutoxid und Chromoxid ausgewählt wird.

2. Generator nach Anspruch 1, dadurch gekennzeichnet, daß man dem Kupferoxid (CuO) Wismutoxid ($Bi_2O_3$) im Verhältnis von mindestens einem Molekül von $Bi_2O_3$ für etwa ein Molekül von CuO hinzufügt.

3. Generator nach Anspruch 2, dadurch gekennzeichnet, daß das Verhältnis etwa ein Molekül $Bi_2O_3$ für ein Molekül CuO beträgt.

4. Elektrochemischer Generator nach Anspruch 1, dadurch gekennzeichnet, daß der Elektrolyt eine Lösung mindestens eines Salzes in mindestens einem organischen Lösungsmittel ist.

FIG.1

U(Volts)

A

B

0 015 401

FIG.2

FIG 3

U (Volts)

G

H

0 015 401